(19) Europäisches Patentamt
European Patent Office
Office européen des brevets

(11) **EP 4 763 916 A1**

(12) **EUROPEAN PATENT APPLICATION**

(43) Date of publication:
    **24.06.2026 Bulletin 2026/26**

(21) Application number: **24307196.6**

(22) Date of filing: **19.12.2024**

(51) International Patent Classification (IPC):
    *C08L 77/02* (2006.01)    *C08G 69/14* (2006.01)

(52) Cooperative Patent Classification (CPC):
    (C-Sets available)
    **C08L 77/02;** C08G 69/14; C08L 2205/02    (Cont.)

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(71) Applicant: **ARKEMA FRANCE
    92800 Puteaux (FR)**

(72) Inventors:
    • **MA, YiYuan (Tina)
      Changshu, Jiangsu, 215522 (CN)**
    • **PRENVEILLE, Thomas
      King of Prussia, 19406-0936 (US)**

(74) Representative: **Bandpay & Greuter
    11, rue Christophe Colomb
    75008 Paris (FR)**

(54) **TRANSLUCENT POLYAMIDE COMPOSITION**

(57) The present invention relates to a translucent composition comprising :

a) From 55 to 97.99% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5

- 1 to 55% by weight of a polyamide B based on the total weight of the polyamide matrix, wherein the C/N ratio of the polyamide A is greater than 6.5;

polyamides A and B have, in absolute value, at least one difference in C/N ratios equal to | C/N ratio (A) - C/N ratio (B)| $\leq$ 3,

the polyamide A comprising at least 45 mol of at least one unit comprising a number of carbon atoms between the amide functional groups (including the carbonyl of the amide) denoted C1,

the polyamide B comprising at least 30 mol% of at least one unit comprising a number of carbon atoms between the amide functions (including the carbonyl of the amide) denoted C2,

with at least one of the equations $|C1-C2| \leq 3$ being fulfilled, if the polyamides A and B each comprise more than one C1 and/or more than one C2 ;

b) from 2 to 25% by weight, preferably from 3 to 20%,based on the total weight of the composition, of short glass fibers;

c) from 0.01 to 20% by weight, based on the total weight of the composition, of acid modified polymer impact modifier comprising three or more blocks of polyamide.

**(Cont. next page)**

EP 4 763 916 A1

(52) Cooperative Patent Classification (CPC): (Cont.)

C-Sets
**C08L 77/02, C08L 77/02, C08L 51/06, C08K 7/14**

## Description

### Field of the disclosure

The invention relates to a translucent polyamide comprising specific glass fibers and a polyamide matrix made of at least two semi-crystalline polyamides. The invention also refers to a process for preparing said composition and its use for the manufacture of sports articles.

### Background

Conventionally, transparent resins are used as materials for melded products required to have usual transparency, such as automotive parts, lighting equipment, electrical parts, panels, housings, and sports articles. In recent years, particularly, the range of applications of the resins as optical materials required to have excellent optical properties has been extended. In particular, the sports markets are currently looking for translucent compositions exhibiting good mechanical properties after molding.

Polyamide resin derived from a structure with polymerized monomers has low birefringence and high transparency, and hence the resin is used as a transparent resin for optical materials, and the like. In that respect, polyamide resin can be used to make sports articles and more specifically sport shoe outsole. Due to its transparency, the design pattern & colour of the midsole can be seen through the polymer outsole by human eyes.

For this application, it is sometimes desired to increase mechanical properties such as stiffness, strength, warpage reduction and surface scratch resistance. For such a reason, glass fibers and impact modifiers can be added to modify the polyamides.

EP3966284 relates to a polyamide composition comprising at least one semi-crystalline aliphatic polyamide and an S-glass fiber, wherein the polyamide composition comprises neither polyolefinic impact modifier nor core-shell modifier.

EP3512914 discloses a polymer composition comprising a linear aliphatic polyamide, an S-glass fibre and a polyolefinic impact modifier.

EP3486287 relates to a semi-transparent polymer composite comprising linear aliphatic polyamide, an S glass fiber and a core-shell impact modifier.

EP3444114 concerns a polyamide moulding compound containing a polyamide mixture consisting of a semi-crystalline polyamide and an amorphous or micro-crystalline polyamide, at least one glass filler and at least one additive.

EP3309199 refers to polyamide moulding compounds comprising a single amorphous copolyimide, at least one monomeric lactam and/or polyamide 12, at least one glass filler and additives.

Unfortunately, glass fibers and/or impact modifiers can increase the crystallization of polyamide leading to opaque polyamide. From the perspective of aesthetic, it is necessary to keep excellent optical properties when the polyamides are modified to improve the mechanical properties. In addition, the use of amorphous polyamide instead of semi-crystalline aliphatic polyamide might hamper the mechanical properties (lower fatigue resistance) and the processability (flowability) of the composition (lower fatigue resistance) while increasing its cost.

There is still a need to develop a polyamide composition offering an improved transparency, color and mechanical performance, particularly flexibility, as required by the sports markets to make sport shoes. The aim of the present invention is to provide a polyamide composition with outstanding optical properties such as high transmittance and low haze as well as excellent mechanical properties such as high flexural modulus (>1000 MPa).

It has been surprisingly found that a combination of at least two specific semi-crystalline polyamides with specific glass fibers and impact modifier allows to get better mechanical properties without adversely affecting the transparency.

### Summary

The invention relates to a translucent composition comprising :

a) From 55 to 97.99% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5, preferably greater than 8, even more preferably greater than 9,
- 1 to 55% by weight of a polyamide B based on the total weight of the polyamide matrix, wherein the C/N ratio of the polyamide A is greater than 6.5, preferably greater than 8, even more preferably greater than 9 ;

polyamides A and B have, in absolute value, at least one difference in C/N ratios equal to | C/N ratio (A) - C/N ratio (B)| ≤ 3, preferably | C/N ratio (A) - C/N ratio (B)| ≤ 2, even more preferably | C/N ratio (A) - C/N ratio (B)| ≤ 1,

the polyamide A comprising at least 45 mol%, preferably 65 mol%, even more preferably 90 mol%, of at least one unit comprising a number of carbon atoms between the amide functional groups (including the carbonyl of the amide) denoted C1,

the polyamide B comprising at least 30 mol%, preferably at least 40 mol%, advantageously at least 45 mol%, of at least one unit comprising a number of carbon atoms between the amide functions (including the carbonyl of the amide) denoted C2,

with at least one of the equations IC1-C2| ≤ 3 being fulfilled, if the polyamides A and B each comprise more than one C1 and/or more than one C2 ;

b) from 2 to 25% by weight, preferably from 3 to 20%, based on the total weight of the composition of short glass fibers ;
c) from 0.01 to 20% by weight, based on the total weight of the composition, of acid modified polymer impact modifier comprising a three or more blocks of polyolefine.

Preferably, the following condition is fulfilled |ratio C/N(A) - ratio C/N (B)| ≤ 2, preferably |ratio C/N(A) - ratio C/N (B)| ≤ 1.

Preferably, the following equations is fulfilled |C1-C2| ≤ 2, preferably |C1-C2| ≤ 1.

Preferably, the polyamide A and the polyamide B have a linear aliphatic structure.

Preferably, the polyamide A and the polyamide B are partially or totally bio-sourced.

Preferably, the polyamide A is chosen among PA10, PA11, PA12, PA1010, PA1012 and PA612, preferably among PA11 and PA12.

Preferably, the polyamide B is chosen among PA10, PA11, PA12, PA1010, PA1012 and PA612, preferably among PA12, PA1010 and PA1012.

Preferably, the matrix comprises a blend of polyamide A and polyamide B chosen among :

- PA 12 as Polyamide A and PA 1012 as Polyamide B ;
- PA 11 as Polyamide A and PA 12 as Polyamide B ;
- PA 11 as Polyamide A and PA 1012 as Polyamide B ;
- PA 11 as Polyamide A and PA 1010 as Polyamide B.

In one embodiment, the composition comprises from 0.1% to 10% by weight, preferably from 0.1 to 3% by weight of additives based on the total weight of the composition, chosen among stabilizers, fluidizing agent, dye, surfactants, whitening agents, antioxidants chain extenders, lubricants, nucleating agents, waxes and their mixture, preferably stabilizers, antioxidants and their mixture.

Preferably, the glass fibers are chosen among :

- E glass fiber comprising from : from 53 to 55 wt% $SiO_2$, from 20 to 24 wt% MgO+CaO, from 6 to 9 wt% $B_2O$, from 12 to 16 wt% $Al_2O_3$ based on the total weight of the glass fiber;
- NE glass fiber comprising from 53 to 57 wt% $SiO_2$, from 13 to 16 wt% $Al_2O_3$, from 15 to 19 wt% $B_2O_3$, from 3 to 6 wt% MgO, from 2 to 5 wt% CaO, from 1 to 4 wt% $TiO_2$, from 0 to 0.2 wt% $Li_2O$, from 0 to 0,2 wt% $Na_2O$, from 0 to 0.2 wt% $K_2O$, from 0.2 to 1 wt% $F_2$; from 7 to 10 wt% MgO+CaO based on the total weight of the glass fiber; and their mixtures. preferably NE.

Preferably, the glass fibers are flat.

Preferably, the acid modified polymer impact modifier comprising a three or more blocks of polyolefine comprises :

a) 0.1 to 70% by weight of an acid functionalizing agent based on the total weight of the impact modifier, preferably from 1 to 50% by weight, even more preferably from 1 to 40% by weight,
b) 30 to 99.9% by weight of a base polymer comprising three or more blocks of polyolefine based on the total weight of the impact modifier, preferably from 50 to 99% by weight, even more preferably from 60 to 99.9% by weight.

Preferably, the acid functionalizing agent is chosen between an unsaturated acid carboxylic or an unsaturated acid carboxylic acid derivatives.

Preferably, the three or more blocks of polyolefine of the base polymer are chosen among styrene, ethylene, propylene, butylene or butadiene.

Preferably, the base polymer is styrene-ethylene-butylene-styrene copolymer.

The invention also relates to a process for preparing the composition according to the invention, comprising the following steps :

a) mixing the polyamide A, the polyamide B and the glass fibers in an extruder at a temperature from 230 to 330°C, preferably from 230 to 300°C to obtain granules

b) injecting the granules at a temperature from 230 to 330°C, preferably from 230 to 300°C on an injection press to obtain the articles.

The invention also refers to the use of the composition according to the invention for sports article, in particular a sports boot, in particular a ski boot or part of a ski boot or a spiked rigid boot, such as a soccer boot, rugby boot or American football boot, a hockey boot or part of a hockey boot, or a running shoe, a golf ball or part of a golf ball, or a lacrosse stick, a hockey article such as a helmet and sports articles for the protection of the head, shoulders, elbows, hands, knees, back or shin, such as helmets, gloves, shoulder pads, elbow pads, knee pads or shin guards.

## Detailed description

The invention relates to a translucent composition comprising :

a) From 55 to 97.99% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5, preferably greater than 8, even more preferably greater than 9,
- 1 to 55% by weight of a polyamide B based on the total weight of the polyamide matrix, wherein the C/N ratio of the polyamide A is greater than 6.5, preferably greater than 8, even more preferably greater than 9 ;

polyamides A and B have, in absolute value, at least one difference in C/N ratios equal to | C/N ratio (A) - C/N ratio (B)| $\leq$ 3, preferably | C/N ratio (A) - C/N ratio (B)| $\leq$ 2, even more preferably | C/N ratio (A) - C/N ratio (B)| $\leq$ 1,

the polyamide A comprising at least 45 mol%, preferably 65 mol%, even more preferably 90 mol%, of at least one unit comprising a number of carbon atoms between the amide functional groups (including the carbonyl of the amide) denoted C1,

the polyamide B comprising at least 30 mol%, preferably at least 40 mol%, advantageously at least 45 mol%, of at least one unit comprising a number of carbon atoms between the amide functions (including the carbonyl of the amide) denoted C2,

with at least one of the equations IC1-C2| $\leq$ 3 being fulfilled, if the polyamides A and B each comprise more than one C1 and/or more than one C2 ;

b) from 2 to 25% by weight, preferably from 3 to 20%, of short glass fibers;

c) from 0.01 to 20% by weight, based on the total weight of the composition, of acid modified polymer impact modifier comprising a three or more blocks of polyolefine.

### *Polyamides*

A semi-crystalline polyamide (PA), within the scope of the invention, refers to a polyamide which has a melting temperature (Tm) in DSC according to standard ISO 11357-3:2013, and an enthalpy of crystallisation during the cooling step at a rate of 20 K/min in DSC measured according to standard ISO 11357-3 (2013) greater than 30 J/g, preferably greater than 40 J/g.

Preferably, polyamides A and B in the matrix of the composition according to the invention are obtained by polycondensation of at least one unit chosen from a C6 to C18 alpha, omega-aminocarboxylic acid, a C5 to C12 lactam and a (Ca diamine).(Cb diacid) unit, wherein "a" represents the number of carbon atoms of the diacid and "b" represents the number of carbon atoms of the diacid, "a" and "b" are from 4 to 36.

Preferably, polyamides are obtained by polycondensation of at least one lactam chosen from pyrrolidinone, 2-piperidinone, enantholactam, caprylolactam, pelargolactam, decanolactam, undecanolactam and lauryllactam.

Preferably, polyamides in the composition according to the invention are obtained by polycondensation of at least one amino acid chosen from 9-aminononanoic acid, 10-aminododecanoic acid (denoted 10), 11-amino-undecanoic acid (denoted 11) and 12-aminododecanoic acid (denoted 12).

Preferably, polyamides are obtained by polycondensation of at least one unit corresponding to the formula (Ca diamine).(Cb diacid), wherein "a" represents the number of carbon atoms of the diamine and "b" represents the number of carbon atoms of the diacid, "a" and "b" are from 4 to 36.

Preferably, the unit (Ca diamine) is aliphatic. The diamine can be chosen from butanediamine (a=4), pentanediamine (a=5), hexanediamine (a=6), heptanediamine (a=7), octanediamine (a=8), nonanediamine (a=9), decanediamine (a= 10), undecanediamine (a= 11), dodecanediamine (a= 12), tridecanediamine (a=13), tetradecanediamine (a=14), hexadecanediamine (a= 16), octadecanediamine (a= 18).

Preferably, the unit (diacid at Cb) is aliphatic. The diacid can be chosen from succinic acid (b=4), pentanedioic acid (b=5), adipic acid (b=6), heptanedioic acid (b=7), octanedioic acid (b=8), azelaic acid (b=9), sebacic acid (b= 10), undecanedioic acid (b= 11), dodecanedioic acid (b= 12), brassylic acid (b= 13), tetradecanedioic acid (b= 14), hexadecanedioic acid (b= 16), octadecanedioic acid (b= 18).

Preferably, the diacid is chosen from adipic acid, suberic acid, azelaic acid, sebacic acid, undecanedioic acid, dodecanedioic acid, brassylic acid, tetradecanedioic acid, pentadecanedioic acid, hexadecanedioic acid and octadecanedioic acid.

Preferably, the following condition is fulfilled in the composition according to the invention : |ratio C/N(A) - ratio C/N (B)| $\leq$ 2, preferably |ratio C/N(A) - ratio C/N (B)| $\leq$ 1.

Preferably, the following equation is fulfilled in the composition according to the invention: |C1-C2| < 2, preferably | C1-C2| $\leq$ 1.

Preferably, the polyamide A and the polyamide B are partially or totally bio-sourced. A bio-sourced raw material is a natural resource, whether animal or plant-based, whose stock can regenerate over a short period of time on a human scale. In particular, this stock must be able to renew itself as quickly as it is consumed.

*Polyamide A*

The polyamide matrix comprises from 45 to 99% by weight, preferably from 50 to 85% by weight and even more preferably from 50 to 75% by weight of a polyamide A based on the total weight of the matrix.

Preferably, the C/N ratio of the polyamide A is greater than 6.5, preferably greater than 8, even more preferably greater than 9.

Preferably, the polyamide A has a linear aliphatic structure.

Preferably, the polyamide A is chosen from PA 11, PA 12, PA 1010, PA 1012, PA 510, PA 513, PA 516, PA 512, PA 610, PA 612, PA613, PA912, PA6/11, PA6/12, PA11/12, PA 6/11/12, PA 6/66/12, PA 6/1010, PA 6/1012, PA 6/1010/1012, PA 6/1012/12, PA 6/66/11/12, PA 6/1010/1012/1014, as well as their copolyamides.

Preferably, the polyamide A is a homopolyamide. This homopolyamide can be obtained by the polycondensation of a lactam, an amino acid or a unit (diamine at Ca).(diacid at Cb), wherein Ca and Cb are as defined above.

Preferably, the polyamide A is chosen among PA10, PA11, PA12, PA1010, PA1012 and PA612, more preferably among PA11 and PA12, even more preferably the polyamide A is PA11.

PA10, PA1010 and PA1012 are bio-sourced polyamides. Indeed, the main monomer used in the production of these polyamides, dodecanedioic acid (DDDA), is bio-sourced and can be obtained from renewable resources such as castor oil. In addition, these polyamides are synthesized by polymerizing dodecanedioic acid with diamines, often with 1,10-diaminodecane, which is also derived from renewable sources.

The basic raw material for PA11 is castor oil, extracted from the castor oil plant from castor seeds. PA11 is obtained by polycondensation of amino-11-undecanoic acid. PA11 has the advantage of being made from plant-based raw materials. Plant-based materials can be grown in large quantities across most of the globe and are bio-sourced.

*Polyamide B*

The polyamide matrix comprises from 1 to 45% by weight, preferably from 10 to 45% by weight and even more preferably from 20 to 45% by weight of a polyamide B based on the total weight of the matrix.

Preferably, the polyamide B has a linear aliphatic structure.

Preferably, the C/N ratio of the polyamide B is greater than 6.5, preferably greater than 8, even more preferably greater than 9.

Preferably, the polyamide B is chosen from PA 11, PA 12, PA 1010, PA 1012, PA 510, PA 513, PA 516, PA 512, PA 610, PA 612, PA613, PA912, PA6/11, PA6/12, PA11/12, PA 6/11/12, PA 6/66/12, PA 6/1010, PA 6/1012, PA 6/1010/1012, PA 6/1012/12, PA 6/66/11/12, PA 6/1010/1012/1014, as well as their copolyamides.

Preferably, the polyamide B is a homopolyamide. This homopolyamide can be obtained by the polycondensation of a lactam, an amino acid or a unit (diamine at Ca).(diacid at Cb), wherein Ca and Cb are as defined above.

Preferably, the polyamide B is chosen among PA10, PA11, PA12, PA612, PA1010 and PA1012, more preferably from PA1010, PA1012 and PA12, even more preferably the polyamide B is PA12.

*Ratio difference*

Polyamides A and B have, in absolute value, at least one difference in C/N ratios equal to | C/N ratio (A) - C/N ratio (B)| $\leq$ 3, preferably | C/N ratio (A) - C/N ratio (B)| $\leq$ 2, even more preferably | C/N ratio (A) - C/N ratio (B)| $\leq$ 1.

*Difference in length of repeat units*

The polyamide A comprises at least 45 mol%, preferably 65 mol%, even more preferably 90 mol%, of at least one unit comprising a number of carbon atoms between the amide functional groups (including the carbonyl of the amide) denoted C1.

The polyamide B comprises at least 30 mol%, preferably at least 40 mol%, advantageously at least 45 mol%, of at least one unit comprising a number of carbon atoms between the amide functions (including the carbonyl of the amide) denoted C2.

Polyamides A and B are chosen so as to comply with the difference in absolute value IC1-C2| $\leq$ 3, preferably IC1-C2| $\leq$ 2, even more preferably IC1-C2| $\leq$ 1.

If the polyamide A is formed from only one type of unit, such as lactam or amino acid homopolyamides, then the polyamide A has only one C1 number. For example, PA11 has a C1 number equal to 11.

If the polyamide A is formed from at least two types of unit, such as homopolyamides formed from XY units (diamine.diacid) or copolyamides, then the polyamide A comprises several C1 numbers. For example, PA610 has a C1 number equal to 6 and a C1 number equal to 10; PA11/610 has a C1 number equal to 11, a C1 number equal to 6, a C1 number equal to 10. In other words, if the polyamide A has n units, then n C1 will be considered for evaluating the condition | C1-C2| $\leq$ 3, n being a natural number from 1 to 6.

The explanations given for the number C1 also apply to the number C2. In other words, if the polyamide B has m units, then m C2 will be considered for evaluating the condition |C1-C2| $\leq$ 3, m being a natural number from 1 to 6.

If polyamides A1 and A2 are formed from several C1 and several C2, at least one condition $|C1_n\text{-}C2_m| \leq 3$ shall be met. Preferably, all the conditions $|C1_n\text{-}C2_m| \leq 3$ shall be met.

As a first example, a composition may comprise 70% by weight of PA1012 and 10% by weight of PA12. The following conditions have to be verified :

The predominant polyamide A is PA1012 (50/50 molar ratio) with $C1_1 = 10$ and $C1_2 = 12$.

The polyamide B is PA12 with C2 = 12.

Regarding the first condition |ratio C/N(A1) - ratio C/N (A2)| $\leq$ 3 :

ratio C/N(A) = 11; ratio C/N (B) = 12 ; | ratio C/N(A) - ratio C/N (B)| = 111 - 121 = 1,

The first condition is met: 1$\leq$ 3 .

Regarding the second condition IC1-C2| $\leq$ 3 :

I $C1_1$-C2| = I10-12I = 2 et I $C1_2$-C2| = I12-12I = 0,

The second condition is met as well : 2 $\leq$ 3 et 0 $\leq$ 3.

As a first example, a composition may comprise 70% by weight of PA1012 and 10% by weight of PA12, based on the total weight of the composition.

The following conditions have to be verified :

The predominant polyamide A is PA1012 (50/50 molar ratio) with $C1_1 = 10$ and $C1_2 = 12$.

The polyamide B is PA12 with C2 = 12.

Regarding the first condition |ratio C/N(A) - ratio C/N (B)| $\leq$ 3 :

ratio C/N(A) = 11; ratio C/N (B) = 12 ; |ratio C/N(A) - ratio C/N (B)| = 111 - 121 = 1,

The first condition is met: 1$\leq$ 3 .

Regarding the second condition IC1-C2| $\leq$ 3 :

I $C1_1$-C2| = I10-12I = 2 et I $C1_2$-C2| = I12-12I = 0,

The second condition is met as well : $2 \leq 3$ et $0 \leq 3$.

As a second example, a composition may comprise 80% by weight of PA11 and 8% by weight of PA6/812 (80/20 molar ratio) based on the total weight of the composition.

The following conditions have to be verified :

The predominant polyamide A is PA11 with C1 = 11.

The polyamide B is PA6/812 with $C2_1 = 6$, $C2_2 = 8$ and $C2_3 = 12$.

Regarding the first condition |ratio C/N(A) - ratio C/N (B)| $\leq 3$ :

ratio C/N(A) = 11; ratio C/N (B) = (0.8*6 + 0.2*10) = 6.8 ;

|ratio C/N(A) - ratio C/N (B)| = |11 - 6.8| = 4.2.

The first condition is not met: 4.2 > 3.

Regarding the second condition IC1-C2| $\leq 3$ :

The content of unit 6 is at least 30 mol%. This unit 6 should therefore be considered in comparison with units 8 and 12.

$$IC1\text{-}C2_1 | = I11\text{-}6| = 5,$$

The second condition is not met: 5 > 3.

The polyamide B does not meet the claimed conditions, the composition therefore does not fall within the scope of the invention.

The polyamide B should slightly hinder the crystallinity of the polyamide A. In that respect, a low content of polyamide B must be kept in the polyamide matrix, i.e. from 1% to 40% by weight based on the total weight of the matrix. In addition, chains length of polyamide B must be close to those of polyamide A, *i.e.* |ratio C/N(A) - ratio C/N (B)| $\leq 3$.

Preferably, C1 and C2 are higher than or equal to 8, preferably higher than or equal to 9.

Preferably, the composition according to the invention, wherein the matrix comprises a blend of polyamide A and polyamide B chosen among :

- PA 12 as Polyamide A and PA 1012 as Polyamide B
- PA 11 as Polyamide A and PA 12 as Polyamide B ;
- PA 11 as Polyamide A and PA 1012 as Polyamide B ;
- PA 11 as Polyamide A and PA 1010 as Polyamide B.

### *Short glass fiber*

According to the invention, the composition comprises from 2 to 25% by weight, preferably from 3 to 20%, based on the total weight of the composition, of short glass fibers.

In the present invention, "short glass fibers" refers to glass fibers with an average length ranging from 1 to 10 mm, preferably from 3 to 6 mm. The average length of the fibres is determined in accordance with standard Q/JS J0361.

The short glass fibers are chosen among :

- E glass fiber comprising from 53 to 55 wt% $SiO_2$, from 20 to 24 wt% MgO+CaO, from 6 to 9 wt% $B_2O$, from 12 to 16 wt% $Al_2O_3$ based on the total weight of the glass fibre ;
- NE glass fiber comprising from 53 to 57 wt% $SiO_2$, from 13 to 16 wt% $Al_2O_3$, from 15 to 19 wt% $B_2O_3$, from 3 to 6 wt% MgO, from 2 to 5 wt% CaO, from 1 to 4 wt% $TiO_2$, from 0 to 0.2 wt% $Li_2O$, from 0 to 0,2 wt% $Na_2O$, from 0 to 0.2 wt% $K_2O$, from 0.2 to 1 wt% $F_2$; from 7 to 10 wt% MgO+CaO based on the total weight of the glass fiber; and their mixtures ;
- Glass fiber comprising from 56-64% by weight of $SiO_2$, 12-20% by weight of $Al_2O_3$, 4-14% by weight $B_2O_3$, 5-12% by weight of $Na_2O+K_2O$, 4-8% by weight of MgO, 0.5-4.5% by weight of CaO; 0-0.6% by weight of $Fe_2O_3$, 0-1% by weight of $TiO_2$;
- Glass fiber comprising from 68-74% by weight of $SiO_2$, 2-5% by weight of $Al_2O_3$, 2-5% by weight of $B_2O_3$, 2-10% by weight of CaO, 0-5% by weight of ZnO, 0-5% by weight of SrO, 0-1% by weight of BaO, 1-5% by weight of MgO, 0-5% by weight of $Li_2O$, 5-12% by weight of $Na_2O$ and 0-10% by weight of $K_2O$, where a total amount of $Li_2O$, $Na_2O$, and $K_2O$ is 8-12% by weight ;
- S-glass fiber comprising from 64-66% by weight of $SiO_2$, 24-25% by weight of $Al_2O_3$, 9.5-10% by weight of MgO, 0-0.2% by weight of CaO, 0-0.2% by weight of $Na_2O+K_2O$, and 0-0.1% by weight of $Fe_2O_3$.

Preferably the short glass fibers are NE glass fiber.

In one embodiment, S glass fibers comprising 64-66% by weight of $SiO_2$, 24-25% by weight of $Al_2O_3$, 9.5-10% by weight of MgO, 0-0.2% by weight of CaO, 0-0.2% by weight of $Na_2O+K_2O$, and 0-0.1% by weight of $Fe_2O_3$, based on the total weight of the glass fiber are excluded from the composition according to the invention.

When the amount of the glass fiber and the polyamide matrix composition are within the abovementioned range, it is possible to produce a molded product that combines good mechanical properties and an excellent transparency.

*Refractive index*

Preferably, the refractive index of the short glass fibers matches the refractive index of the polyamide matrix described above. Preferably, the short glass fibers have a refractive index of 1.50 to 1.54, and even more preferably from 1.50 to 1.52 with respect to light having a wavelength of 589 nm.

The refractive index is measured by GB/T 7962 .1-2010 method or by oil immersion method.

The refractive index of the glass fiber can be appropriately adjusted to the refractive index of the resin composition.

In the case where the refractive index of the glass fiber is lower than the desired refractive index, the refractive index can be increased, for example, by replacing a portion of the silica ($SiO2$) with calcium oxide ($CaO$).

In the case where the refractive index of the glass fiber is higher than the desired refractive index, the refractive index can be lowered, for example, by replacing a portion of the calcium oxide ($CaO$) with an alkali metal compound.

*Shape and size*

Preferably, the short glass fibers are round (i.e. circular cross sectional area) or flat (*i.e.* non circular cross sectional area), more preferably flat.

The diameter of the round glass fibers is preferably from 5 to 45 $\mu$m, preferably from 5 to 25 $\mu$m. The diameter of the glass fibers is determined in accordance with standard ISO 1888:2022.

Flat glass fibers may be described by two diameters "a" and "b". Preferably, the smaller diameter "a" of the flat glass fibers is from 3 to 15 $\mu$m, and more preferred from 5 to 10 $\mu$m. The greater diameter "b" of the flat glass fibers is preferably from 5 to 28 $\mu$m, and even more preferably from 7 to 28 $\mu$m. The diameter of the glass fibers is determined in accordance with standard ISO 1888:2022.

The aspect ratio of the flat glass fibers is from 1:10 to 2:1, preferably from 1:8 to 1:1, even more preferably from 1:5 to 1:2.

*Preparation*

Glass fibers can be produced by any spinning process conventionally known for a continuous glass fiber. For example, it is possible to fibrillate the glass by different processes, such as the direct melting process, in which the glass is subjected to continuous vitrification in a furnace, then introduced into a crucible and subjected to spinning by a bushing fitted to the lower part of the crucible, and the remelting process, in which melted glass is transformed into a bead or a rod, followed by remelting and spinning.

Advantageously, the glass fiber is surface-treated with a coupling agent in order to increase the affinity and the adhesion to the resin composition. A good affinity between the glass fiber and the resin composition prevents any decrease in the transparency of the molded product caused by the formation of voids.

Mention may be made, as coupling agents, of those based on silane, on borane, on aluminates, those of titanate type, and the like. In particular, silane coupling agents are preferred as they make possible good adhesion between the polyamide matrix and the glass fibers. Use may be made, as coupling agent of silane type, of aminosilane, epoxysilane and acrylsilane coupling agents and the like. Among silane coupling agents, aminosilane coupling agents are preferred.

In addition, the treatment of the fibers can optionally comprise film-forming agents, lubricating agents, antistatic agents and the like, in addition to the coupling agent. These components can be used alone or in combination. Mention may be made, as examples of film-forming agent, of vinyl acetate, urethane, acrylic, polyester, polyether, phenoxy, polyamide and epoxy resins and/or the like. Mention may be made, as examples of lubricating agent, of aliphatic ester, aliphatic ether, aromatic ester or aromatic ether surface-active agents. Mention may be made, as examples of antistatic agent, of inorganic salts, such as lithium chloride or potassium iodide, and also quaternary ammonium salts, such as ammonium chloride or ammonium ethosulphate.

*Impact modifier*

According to the invention, the composition comprises 0.01 to 20% by weight, based on the total weight of the composition, of acid modified polymer impact modifier comprising three or more blocks of polyolefine.

Acid modified polymers refer to a family of copolymers that are resultants of acid functionalization of a base polymer. In the present invention, the base polymer comprises a three or more blocks of polyolefine. The acid modified polymers may be prepared from a base polymer and an un-saturated acid or anhydride as a functionalizing agent through an acid modification process. This acid modification may be carried out by grafting a base polymer with unsaturated carboxylic acids and/or unsaturated carboxylic acid derivatives. Preferably, a carboxylic acid or a carboxylic acid derivative selected from the group consisting of unsaturated carboxylic esters and unsaturated carboxylic anhydrides is used. The conditions under which the grafting of the base polymer proceeds are well known to a skilled person. Acid modified polymer contains carboxylic groups or anhydride groups in the macromolecule introduced by the modification process.

Preferably, the acid modified polymer impact modifier comprising a three or more blocks of polyolefine has a refractive index similar to that of the polyamide.

Preferably, the refractive index of the acid modified polymer impact modifier comprising a three or more blocks of polyolefine is from 1.50 to 1.54, more preferably from 1.50 to 1.52.

Preferably, the acid modified polymer impact modifier comprising a three or more blocks of polyolefine comprises :

a) 0.1 to 70% by weight of an acid functionalizing agent based on the total weight of the impact modifier, preferably from 1 to 50% by weight, even more preferably from 1 to 40% by weight,
b) 30 to 99.9% by weight of a base polymer comprising three or more blocks of polyolefine based on the total weight of the impact modifier, preferably from 50 to 99% by weight, even more preferably from 60 to 99.9% by weight.

Preferably, the acid functionalizing agent is chosen between an unsaturated acid carboxylic or an unsaturated acid carboxylic acid derivatives.

The unsaturated carboxylic acid is a carboxylic acid with at least one unsaturated carbon-carbon bond. Preferably, the unsaturated carboxylic acid is one or more selected from acrylic acid, meth-acrylic acid, alpha ethylacrylic acid, maleic acid, fumaric acid, itaconic acid, citraconic acid, aconitic acid, tetrahydrophthalic acid, or butenylsuccinic acid. The unsaturated carboxylic ester is an ester of an unsaturated carboxylic acid. Preferably, the un-saturated carboxylic ester is one or more selected from esters of acrylic acid, methacrylic acid, alpha ethylacrylic acid, maleic acid, fumaric acid, itaconic acid, citraconic acid, aconitic acid, tetrahydrophthalic acid, or butenylsuccinic acid. The unsaturated carboxylic anhydride is an anhydride of an unsaturated dicarboxylic acid. Preferably, the unsaturated carboxylic anhydride is one or more selected from maleic anhydride, itaconic anhydride, or citraconic anhydride.

Preferably, the three or more blocks of polyolefine of the base polymer are chosen among styrene, ethylene, propylene, butylene, methyl methacrylate or butadiene.

Preferably, the base polymer is styrene-ethylene-butylene-styrene copolymer.

The molecular weight, the index MFI, the density of these polyolefins may also vary widely, which the person skilled in the art will know. MFI, abbreviation for Melt Flow Index, is a measure of fluidity in the molten state. It is measured according to standard ASTM 1238.

Advantageously, the acid impact modifier polymer is selected from styrene/ethylene-butene/styrene (SEBS), styrene/butadiene/styrene (SBS), styrene/isoprene/styrene (SIS), styrene/ethylenepropylene/styrene (SEPS) block copolymers, grafted with maleic anhydride or glycidyl methacrylate, in which the degree of grafting is, for example, from 0.01 to 5% by weight.

Preferably, the acid modified polymer impact modifier is maleic anhydride grafted styrene-ethylene-butylene-styrene (SEBS) copolymer.

It may for example be Kraton®FG 1901 (SEBS functionalized maleic anhydride), Globalprene® 9901 (SEBS functionalized maleic anhydride), Taipol® (SEBS maleic anhydride).

***Additives***

In one embodiment, the composition comprises from 0.1% to 10% by weight, preferably from 0.1 to 3% by weight of one or more additives based on the total weight of the composition, chosen among stabilizers, fluidizing agent, dye, surfactants, whitening agents, antioxidants chain extenders, lubricants, nucleating agents, waxes and their mixture, preferably stabilizers, antioxidants and their mixture.

Preferably, the stabilizer is chosen among heat stabilizer, UV stabilizer, light stabilizer.

In another embodiment, the translucent composition consists of :

a) From 45 to 97.89% by weight, based on the total weight of the composition, of a semi-crystalline polyamide matrix comprising :

-    45 to 99% by weight of a polyamide A based on the total weight of the matrix, wherein the C/N ratio of the polyamide A is greater than 6.5, preferably greater than 8, even more preferably greater than 9,
-    1 to 55% by weight of a polyamide B based on the total weight of the polyamide matrix, wherein the C/N ratio of the polyamide A is greater than 6.5, preferably greater than 8, even more preferably greater than 9 ;

polyamides A and B have, in absolute value, at least one difference in C/N ratios equal to | C/N ratio (A) - C/N ratio (B)| ≤ 3, preferably | C/N ratio (A) - C/N ratio (B)| ≤ 2, even more preferably | C/N ratio (A) - C/N ratio (B)| ≤ 1,

the polyamide A comprising at least 45 mol%, preferably 65 mol%, even more preferably 90 mol%, of at least one unit comprising a number of carbon atoms between the amide functional groups (including the carbonyl of the amide) denoted C1,

the polyamide B comprising at least 30 mol%, preferably at least 40 mol%, advantageously at least 45 mol%, of at least one unit comprising a number of carbon atoms between the amide functions (including the carbonyl of the amide) denoted C2,

with at least one of the equations IC1-C2| ≤ 3 being fulfilled, if the polyamides A and B each comprise more than one C1 and/or more than one C2 ;

b) from 2 to 25% by weight, preferably from 3 to 20%, based on the total weight of the composition, of short glass fibers ;
c) from 0.01 to 20% by weight, based on the total weight of the composition, of acid modified polymer impact modifier comprising three or more blocks of polyolefine ;
d) from 0,1% to 10% by weight of additives based on the total weight of the composition, chosen among stabilizers, fluidizing agent, dye, surfactants, whitening agents, antioxidants chain extenders, lubricants, nucleating agents, waxes and their mixture.

### *Process*

According to the invention, the process for preparing the composition comprises the following steps :

a) mixing the polyamide A, the polyamide B and the glass fibers in an extruder at a temperature from 230 to 330°C, preferably from 230 to 300°C to obtain granules
b) injecting the granules at a temperature from 230 to 330°C, preferably from 230 to 300°C on an injection press to obtain the articles.

In one embodiment, the step a) of the process further comprises the addition of the impact modifier with the polyamide A, the polyamide B and the glass fibers.

### *Use*

According to the invention, the composition is used for sports article, in particular a sports boot, in particular a ski boot or part of a ski boot or a spiked rigid boot, such as a soccer boot, rugby boot or American football boot, a hockey boot or part of a hockey boot, or a running shoe, a golf ball or part of a golf ball, or a lacrosse stick, a hockey article such as a helmet and sports articles for the protection of the head, shoulders, elbows, hands, knees, back or shin, such as helmets, gloves, shoulder pads, elbow pads, knee pads or shin guards.

### **Exemples**

### *Example 1*

#### *Preparation of the compositions*

The compositions illustrated in Table 1 were prepared by melt blending polyamide granules with glass fibres. This mixture was compounded on a co-rotating twin-screw extruder with a diameter of 26 mm and a flat temperature profile (T°) of 250°C. The screw speed was 500 rpm and the flow rate 25 kg/h. The compositions were then moulded on an injection moulding machine (Engel) at a set temperature of 240°C for the feed, 260°C for the nozzle and a mould temperature of 60°C for test-piece to study the mechanical and optical properties of the compositions according to the standards below.

[Table 1]

| | CE1 Comparative | CE2 Comparative | CE3 Comparative | E1 Invention | E2 Invention |
|---|---|---|---|---|---|
| PA11[1] | 68 | 65 | 68 | 65 | 63 |
| PA12[2] | 22 | 22 | 23 | 22 | 21 |
| NE-glass CNG3PA820S [3] | - | 3 | 3 | 3 | 6 |
| FG1901 G polymer[4] | 10 | - | - | 10 | 10 |
| Exxelor®VA1 803[5] | - | 10 | 6 | - | - |
| \|ratio C/N(A1) - ratio C/N (A2) \| | 1 | 1 | 1 | 1 | 1 |
| \|C1-C2\| | 1 | 1 | 1 | 1 | 1 |

1 PA11 is an aliphatic semi-crystalline polyamide having inherent viscosity of 1.4, sold under the trademark Rilsan® KNO purchased from Arkema France.
2 PA12 is an aliphatic semi-crystalline polyamide sold under the trademark Rilsamid® is a purchased from Arkema France.
3 NE-glass CNG3PA820S is NE-type glass fibers purchased from Nittobo.
4 FG1901 G polymer is an impact modifier corresponding to a triblock copolymer based on styrene and ethylene/-butylene with maleic anhydride grafted purchased from Kraton™.
5 Exxelor® VA1803 is an impact modifier corresponding to an ethylene copolymer functionalized with maleic anhydride grafted from ExxonMobil Chemical.

*Evaluating mechanical and optical properties*

The machine used to measure the mechanical properties of the samples is INSTRON 5982 for Flexure, Konica Minolta CM3610A for Transmittance and Haze.
The flexural modulus was measured in line with ISO 178:2019 on ISO 179:2023 impact bars.
Plates measuring $100 \times 100 \times 1$ mm$^3$ were injection moulded for transmittance and Haze measurements. The following parameters were used: unpolished mould ; ENGEL VICTORY 500, 160T hydraulic press ; injection temperature (feed/nozzle = 260°C/280°C) ; mould temperature = 60°C ; holding time = 20s ; material holding pressure = 525 bars ; cooling time = 20 s.

[Table 2]

| | CE1 Comparative | CE2 Comparative | CE3 Comparative | E1 Invention | E2 Invention |
|---|---|---|---|---|---|
| Flexural modulus (MPa) | <1000 | >1000 | >1000 | >1000 | >1000 |
| Transmittance 1mm | 77 | 60 | 65 | 76 | 75 |
| Haze 3mm | 71 | 98 | 98 | 69 | 79 |

The use of the right impact modifier with NE-glass fiber in the compositions results in higher flexural modulus as well as higher transmittance and lower haze.
The compositions according to the invention are therefore more translucent while exhibiting good mechanical properties.

**Claims**

**1.** A translucent composition comprising :

a) From 55 to 97.99% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5, preferably greater than 8, even more preferably greater than 9,

- 1 to 55% by weight of a polyamide B based on the total weight of the polyamide matrix, wherein the C/N ratio of the polyamide A is greater than 6.5, preferably greater than 8, even more preferably greater than 9 ; polyamides A and B have, in absolute value, at least one difference in C/N ratios equal to | C/N ratio (A) - C/N ratio (B)| $\leq$ 3, preferably | C/N ratio (A) - C/N ratio (B)| $\leq$ 2, even more preferably | C/N ratio (A) - C/N ratio (B)| $\leq$ 1,

the polyamide A comprising at least 45 mol%, preferably 65 mol%, even more preferably 90 mol%, of at least one unit comprising a number of carbon atoms between the amide functional groups (including the carbonyl of the amide) denoted C1,

the polyamide B comprising at least 30 mol%, preferably at least 40 mol%, advantageously at least 45 mol%, of at least one unit comprising a number of carbon atoms between the amide functions (including the carbonyl of the amide) denoted C2,

with at least one of the equations IC1-C2| $\leq$ 3 being fulfilled, if the polyamides A and B each comprise more than one C1 and/or more than one C2 ;

b) From 2 to 25% by weight, based on the total weight of the composition, of short glass fibers, preferably 3 to 20% of glass fibers ;

c) From 0.01 to 20% by weight, based on the total weight of the composition, of acid modified polymer impact modifier comprising a three or more blocks of polyolefine.

2. Composition according to claim 1,wherein the following condition is fulfilled: |ratio C/N(A) - ratio C/N (B)| $\leq$ 2, preferably |ratio C/N(A) - ratio C/N (B)| $\leq$ 1.

3. Composition according to any of claims 1 or 2, wherein at least one of the following equations is fulfilled: |C1-C2| $\leq$ 2, preferably |C1-C2| $\leq$ 1.

4. A composition according to any of claims 1 to 3, wherein the polyamide A and the polyamide B have a linear aliphatic structure.

5. A composition according to any of claims 1 to 4, wherein the polyamide A and the polyamide B are partially or totally bio-sourced.

6. A composition according to any of claims 1 to 5, wherein the polyamide A is chosen among PA10, PA11, PA12, PA1010, PA1012 and PA612, preferably among PA11 and PA12.

7. A composition according to any of claims 1 to 6, wherein the polyamide B is chosen among PA10, PA11, PA12, PA10.10, PA1012 and PA612, preferably among PA12, PA1010 and PA1012.

8. A composition according to any of claims 1 to 7, wherein the matrix comprises a blend of polyamide A and polyamide B chosen among :

- PA 12 as Polyamide A and PA 1012 as Polyamide B ;- PA 11 as Polyamide A and PA12 as Polyamide B;
- PA 11 as Polyamide A and PA1012 as Polyamide B ;
- PA 11 as Polyamide A and PA1010 as Polyamide B.

9. A composition according to any of claims 1 to 9 comprising from 0.1 to 10% by weight, preferably from 0.1 to 3% by weight of additives based on the total weight of the composition, chosen among stabilizers, fluidizing agent, dye, surfactants, whitening agents, antioxidants chain extenders, lubricants, nucleating agents, waxes and their mixture, preferably among stabilizers, antioxidants and their mixture.

10. A composition according to any of claims 1 to 9, wherein the glass fiber are chosen among :

- E glass fiber comprising from : from 53 to 55 wt% $SiO_2$, from 20 to 24 wt% MgO+CaO, from 6 to 9 wt% $B_2O$, from 12 to 16 wt% $Al_2O_3$ based on the total weight of the glass fibre ;
- NE glass fiber comprising from 53 to 57 wt% $SiO_2$, from 13 to 16 wt% $Al_2O_3$, from 15 to 19 wt% $B_2O_3$, from 3 to 6 wt% MgO, from 2 to 5 wt% CaO, from 1 to 4 wt% $TiO_2$, from 0 to 0.2 wt% $Li_2O$, from 0 to 0,2 wt% $Na_2O$, from 0 to 0.2 wt% $K_2O$, from 0.2 to 1 wt% $F_2$; from 7 to 10 wt% MgO+CaO based on the total weight of the glass fiber ; and their mixtures. preferably NE.

**11.** A composition according to any of claims 1 to 10, wherein the glass fibers are flat.

**12.** A composition according to any of claims 1 to 11, wherein the acid modified polymer impact modifier comprising three or more blocks of polyolefine comprises :

    a) 0.1 to 70% by weight of an acid functionalizing agent based on the total weight of the impact modifier, preferably from 1 to 50% by weight, even more preferably from 1 to 40% by weight,
    b) 30 to 99.9% by weight of a base polymer comprising three or more blocks of polyolefine based on the total weight of the impact modifier, preferably from 50 to 99% by weight, even more preferably from 60 to 99.9% by weight,

**13.** A composition according to claim 12, wherein the acid functionalizing agent is chosen between an unsaturated acid carboxylic or an unsaturated acid carboxylic acid derivatives.

**14.** A composition according to any of claims 12 or 13, wherein the three or more blocks of the base polymer are chosen among styrene, ethylene, propylene, butylene or butadiene.

**15.** A composition according to any of claims 12 to 14, wherein the base polymer is styrene-ethylene-butylene-styrene copolymer.

**16.** Process for preparing a composition according to any of claims 1 to 15, comprising the following steps :

    c) mixing the polyamide A, the polyamide B and the glass fibers in an extruder at a temperature from 230 to 330°C, preferably from 230 to 300°C to obtain granules
    d) injecting the granules at a temperature from 230 to 330°C, preferably from 230 to 300°C on an injection press to obtain the articles.

**17.** Use of a composition according to claims 1 to 16 for sports article, in particular a sports boot, in particular a ski boot or part of a ski boot or a spiked rigid boot, such as a soccer boot, rugby boot or American football boot, a hockey boot or part of a hockey boot, or a running shoe, a golf ball or part of a golf ball, or a lacrosse stick, a hockey article such as a helmet and sports articles for the protection of the head, shoulders, elbows, hands, knees, back or shin, such as helmets, gloves, shoulder pads, elbow pads, knee pads or shin guards.

## EUROPEAN SEARCH REPORT

**Application Number**

EP 24 30 7196

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/026153 A1 (PRENVEILLE THOMAS [FR] ET AL) 25 January 2024 (2024-01-25) | 1-5,7, 9-17 | INV. C08L77/02 |
| A | * page 11; example EI 1; table 1 * | 6,8 | ADD. C08G69/14 |
| | ----- | | |
| X | US 2023/220202 A1 (VINCENT GUILLAUME [CN] ET AL) 13 July 2023 (2023-07-13) | 1-6,9, 12-17 | |
| A | * page 13; example I7; table 1 * | 7,8,10, 11 | |
| | ----- | | |

**TECHNICAL FIELDS SEARCHED (IPC)**

C08G
C08L

The present search report has been drawn up for all claims

| Place of search | Date of completion of the search | Examiner |
|---|---|---|
| Munich | 22 May 2025 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 763 916 A1

### ANNEX TO THE EUROPEAN SEARCH REPORT
### ON EUROPEAN PATENT APPLICATION NO.

EP 24 30 7196

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | Publication date |
|---|---|---|---|
| US 2024026153 A1 | 25-01-2024 | CN 116438256 A | 14-07-2023 |
| | | EP 4247897 A1 | 27-09-2023 |
| | | FR 3116281 A1 | 20-05-2022 |
| | | JP 2023550343 A | 01-12-2023 |
| | | KR 20230107845 A | 18-07-2023 |
| | | US 2024026153 A1 | 25-01-2024 |
| | | WO 2022106776 A1 | 27-05-2022 |
| US 2023220202 A1 | 13-07-2023 | CN 115702198 A | 14-02-2023 |
| | | EP 4165126 A1 | 19-04-2023 |
| | | FR 3111351 A1 | 17-12-2021 |
| | | JP 2023529869 A | 12-07-2023 |
| | | KR 20230025693 A | 22-02-2023 |
| | | US 2023220202 A1 | 13-07-2023 |
| | | WO 2021250352 A1 | 16-12-2021 |

EPO FORM P0459

## REFERENCES CITED IN THE DESCRIPTION

**Patent documents cited in the description**

- EP 3966284 A
- EP 3512914 A
- EP 3486287 A
- EP 3444114 A
- EP 3309199 A
- GB 796212010 T